# EUROPÄISCHE PATENTANMELDUNG

(11) **EP 1 482 325 A2**
(43) Veröffentlichungstag der Anmeldung: **01.12.2004**
(21) Anmeldenummer: 04012305.1
(22) Anmeldetag: 25.05.2004
(51) Int. Cl.: G01S 11/16

(54) **Messsystem zur Bestimmung einer absoluten Position eines sich entlang einer Führungsschiene bewegenden Elementes**

(30) Priorität: 28.05.2003 DE 10324532
(71) Anmelder: DORMA GmbH + Co. KG, 58256 Ennepetal (DE)
(72) Erfinder: Hoopmann, Harald, 26655 Westerstede-Ocholt (DE); Rogge, Stefan, 26135 Oldenburg (DE)

(57) **Zusammenfassung**

Die Erfindung betrifft ein Messsystem zur Bestimmung einer absoluten Position eines sich entlang einer Führungsschiene bewegenden Elementes, das mittels eines mit hoher Geschwindigkeit versandten Startsignales angesteuert wird. Nach dem Empfang des Startsignales wird durch einen Messsignalempfänger in dem Element eine Laufzeit (tₓ, t_{y}, t_{z}) eines bei dem Versenden des Startsignales versandten Messsignales, das entlang der Führungsschiene und langsamer als das Startsignal mit konstanter bestimmter Geschwindigkeit läuft, bis zum Eintreffen des Messsignales gemessen. Daraus kann die absolute Position des Elementes bestimmt werden.

## Beschreibung

Die Erfindung betrifft ein Messsystem zur Bestimmung einer absoluten Position eines sich entlang einer Führungsschiene bewegenden Elementes, das insbesondere mittels eines mit hoher Geschwindigkeit versandten Startsignales angesteuert wird, eine Horizontalschiebewand mit mehreren sich entlang einer Führungsschiene bewegenden Elementen, die insbesondere mittels eines mit hoher Geschwindigkeit versandten Startsignales angesteuert werden, sowie ein Element für eine Horizontalschiebewand mit mehreren sich entlang einer Führungsschiene bewegenden Elementen, die insbesondere mittels eines mit hoher Geschwindigkeit versandten Startsignales angesteuert werden.

Es gibt viele Absolut-Positions-Messsysteme auf dem Markt, welche fast alle nach dem gleichen Prinzip arbeiten. Hierbei werden innerhalb eines Sensors Umdrehungen auf einer Codierscheibe abgetastet und über eine Recheneinheit auf die Position umgeformt. Dabei dient bei größeren Längen ein Seil als Verbindung zum Sensor. Es gibt auch Einheiten, bei denen die Maßverkörperung direkt auf dem Verfahrweg angebracht ist. Diese Möglichkeiten sind aber wegen der zunehmenden Datendichte auf kurze Strecken begrenzt.

Zum Messen großer Längen mit hoher Genauigkeit sind optische oder elektromagnetische Inkrementalgeber bekannt, bei denen ein von einem Nullpunkt gefahrener Weg anhand der von dem Inkrementalgeber abgegebenen Anzahl von Pulsen ermittelt wird, wodurch die Position aus dem Nullpunkt und dem zurückgelegten Weg bestimmt werden kann. An diesem Verfahren ist jedoch nachteilig, dass die Anzahl der Pulse entweder nicht flüchtig zwischengespeichert werden muss oder die Position mit einem Stromausfall verloren geht, wodurch das Element für eine neue Positionierung erst wieder in den Nullpunkt gefahren werden müsste. Dies ist insbesondere bei Systemen, bei denen sich mehrere Elemente auf der gleichen Strecke befinden, wie z. B. bei einer Horizontalschiebewand, nicht wünschenswert. Weiter weist ein solches Messsystem in Systemen mit mehreren sich entlang einer Führungsschiene bewegenden Elementen den Nachteil auf, dass es aufgrund von Toleranzen bei den einzelnen in den jeweiligen Elementen verwendeten Inkrementalgebern fehleranfällig ist.

Es ist daher Aufgabe der vorliegenden Erfindung, ein Messsystem zur Bestimmung einer absoluten Position eines sich entlang einer Führungsschiene bewegenden Elementes, das insbesondere mittels eines mit hoher Geschwindigkeit versandten Startsignales angesteuert wird, zu schaffen, bei dem die zuvor beschriebenen Nachteile nicht auftreten.

Diese Aufgabe wird durch ein Messsystem mit den im Patentanspruch 1 angegebenen Merkmalen gelöst. Eine Horizontalschiebewand mit einem solchen Messsystem ist im Patentanspruch 10 definiert und ein Element für eine Horizontalschiebewand mit den Merkmalen eines solchen Messsystemes ist im Patentanspruch 12 definiert. Vorteilhafte Ausgestaltungen der Gegenstände der Patentansprüche 1,10 und 12 ergeben sich aus den jeweiligen Unteransprüchen.

Das erfindungsgemäße Messsystem ist demnach durch einen in dem Element angeordneten Messsignalempfänger gekennzeichnet, der nach dem Empfang des Startsignales eine Laufzeit eines bei dem Versenden des Startsignales versandten Messsignales, das entlang der Führungsschiene und langsamer als das Startsignal mit konstanter bestimmter Geschwindigkeit läuft, bis zum Eintreffen des Messsignales misst. Hierdurch wird eine besondere Flexibilität eines jeweiligen zu verfahrenden Objektes geschaffen, da jede Stellung eines einzelnen Elementes jederzeit angefahren werden kann, ohne eine Nullpunkt-Indizierung vornehmen zu müssen oder mechanische Hilfsmittel vorzusehen. Dies wird insbesondere dadurch erreicht, dass in dem Element automatisch nach Empfang eines z. B. zur Initialisierung oder zyklisch versandten Startsignales auf das Eintreffen des Messsignales gewartet wird, wonach aufgrund der Laufzeit des mit konstanter bestimmter Geschwindigkeit laufenden Messsignales die Distanz zwischen dem Ursprung des Messsignales und dem Element und somit dessen Position einfach bestimmt werden kann. Da das Startsignal z. B. zur Initialisierung oder zyklisch versandt wird, kann die Positionsbestimmung auch unmittelbar nach einem Stromausfall erfolgen, ohne dass von dem Element zunächst ein Nullpunkt angefahren werden muss.

Erfindungsgemäß wird das Startsignal vorzugsweise elektrisch, optisch oder per Funk versandt. In diesem Fall kommt das Startsignal an jedem dem Messsystem angeschlossenen Element praktisch gleichzeitig an und dient als gemeinsame Referenz. Das langsamer laufende Messsignal wird aufeinanderfolgend von jedem sich entlang der Führungsschiene bewegenden Element empfangen und die jeweilige Position kann aus der jeweiligen Laufzeit errechnet werden.

Das Messsignal ist in einer ersten bevorzugten Ausführungsform der Erfindung ein in die Führungsschiene oder in ein entlang der Führungsschiene verlaufendes Mittel eingekoppeltes Schallsignal, vorzugsweise Ultraschallsignal. In diesem Fall besteht zwischen dem z. B. mit Lichtgeschwindigkeit versandten Startsignal und dem mit Schallgeschwindigkeit versandten Messsignal ein deutlicher Laufzeitunterschied, wodurch eine genaue Positionsbestimmung möglich ist. Das Schallsignal kann erfindungsgemäß an diskreten Punkten ausgekoppelt werden, um ein einfacheres Erfassen an einem jeweiligen Element zu ermöglichen.

In einer zweiten bevorzugten Ausführungsform nach der Erfindung ist das Messsignal ein zwischen diskreten Punkten der Führungsschiene oder entlang der Führungsschiene jeweils verzögert weiterlaufendes elektrisches Signal und/oder Lichtsignal. Als zwischen diskreten Punkten der Führungsschiene oder entlang der Führungsschiene jeweils verzögert weiterlaufendes Lichtsignal wird hier insbesondere ein solches einer Leuchtmittelkette angesehen, bei dem die diskret mit konstantem Abstand angeordneten Leuchtmittel mit konstantem zeitlichem Abstand aufeinander folgend kurz aufleuchten. Ein zwischen diskreten Punkten der Führungsschiene oder entlang der Führungsschiene jeweils verzögert weiterlaufendes elektrisches Signal kann z. B. ein solches sein, bei dem anstelle der Leuchtmittel in der zuvor beschriebenen Ausgestaltung Spulen angeordnet sind.

Im Fall der Auskoppelung des Schallsignales an diskreten Punkten oder des zwischen diskreten Punkten der Führungsschiene oder entlang der Führungsschiene jeweils verzögert weiterlaufenden elektrischen Signales und/oder Lichtsignales haben die diskreten Punkte vorzugsweise einen Abstand gemäß der gewünschten Messgenauigkeit zueinander. Dieser Abstand ist erfindungsgemäß weiter vorzugsweise 10 mm. In diesem Fall kann die Position eines Elementes erfindungsgemäß auf 10 mm genau angegeben werden. Diese Genauigkeit kann durch entsprechende Sensorik im Messsignalempfänger noch erhöht werden.

Erfindungsgemäß wird das Startsignal vorzugsweise zyklisch versandt und das Messsignal ist erfindungsgemäß vorzugsweise ein entsprechend oft versandtes Pulssignal.

Das erfindungsgemäße Messsystem umfasst vorzugsweise einen Signalgeber, der das Messsignal erzeugt und versendet, welcher weiter vorzugsweise an einem Ende der Führungsschiene angeordnet ist.

In dem erfindungsgemäßen Messsystem ist es vorzugsweise vorgesehen, dass das Element seine Position anhand der gemessenen Laufzeit des Messsignales und der konstanten bestimmten Geschwindigkeit bestimmt, mit der das Messsignal läuft.

Eine Horizontalschiebewand nach der Erfindung mit mehreren sich entlang einer Führungsschiene bewegenden Elementen, die mittels eines mit hoher Geschwindigkeit versandten Startsignales angesteuert werden, weist ein erfindungsgemäßes Messsystem auf, wobei jedes Element einen entsprechenden Messsignalempfänger aufweist.

Ein Element für eine Horizontalschiebewand mit mehreren sich entlang einer Führungsschiene bewegenden Elementen, die mittels eines mit hoher Geschwindigkeit versandten Startsignales angesteuert werden, weist einen Messsignalempfänger eines Messsystemes nach der Erfindung auf.

In der erfindungsgemäßen Horizontalschiebewand und/oder dem erfindungsgemäßen Element wird vorzugsweise der Abstand des einen Elementes zu einem nächsten in Fahrtrichtung benachbarten Element oder Endpunkt des einen Elementes ermittelt und der Antrieb des einen Elementes entsprechend gesteuert.

Weitere Einzelheiten, Merkmale und Vorteile der Erfindung ergeben sich aus der nachfolgenden Beschreibung eines bevorzugten Ausführungsbeispieles anhand der Zeichnungen.

Es zeigt:

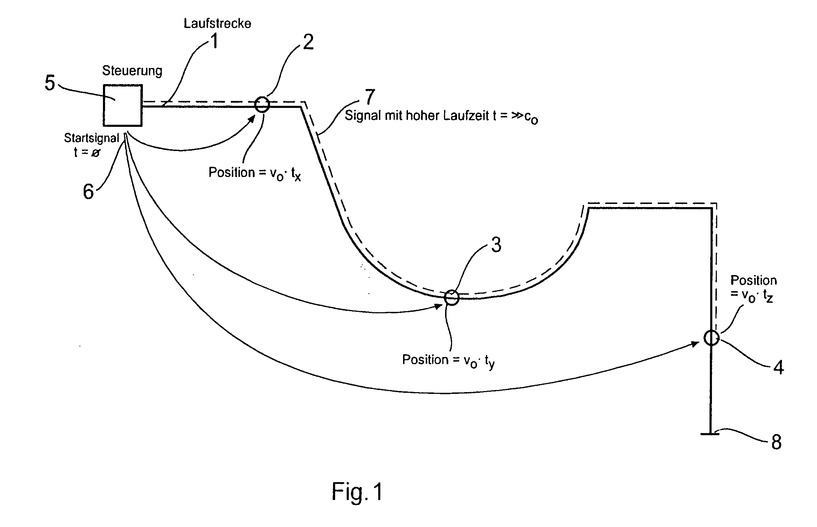

- Figur 1:: Eine Aufsicht auf ein erfindungsgemäßes System, bei dem die Position von drei Elementen entlang einer Laufstrecke nach der Erfindung ermittelt wird.

An einem Ende einer Laufstrecke 1, auf der ein erstes Element 2 in einer ersten Position, ein zweites Element 3 in einer zweiten Position und ein drittes Element 4 in einer dritten Position angeordnet sind, befindet sich eine Steuerung 5. An dem anderen Ende der Laufstrecke 1 befindet sich ein Endpunkt 8. Die Laufstrecke 1 weist Stromschienen auf, über die alle Elemente 2, 3, 4 mit der Steuerung 5 verbunden sind. Diese Führungsschienen liefern den Elementen 2, 3, 4 Energie und eventuell Daten. Der Datenverkehr kann alternativ auch optisch oder über Funk realisiert werden. Die Steuerung 5 sendet über den Datenstrom zyklisch ein Startsignal 6, welches die Elemente 2, 3, 4 veranlasst, innerhalb eines Messsignalempfängers eine Empfangseinrichtung zu aktivieren und einen schnellen Zähler zu starten. Die Steuerung 5 weist einen Signalgeber auf, der mit dem Startsignal 6 der Steuerung 5 ein zu dem Startsignal 6 relativ langsam laufendes Messsignal 7 entlang der Laufstrecke 1, z. B. durch die Stromschienen, sendet. Dieses Messsignal 7 kann z. B. aus einem Ultraschallimpuls bestehen, der innerhalb eines eine der Stromschienen bildenden Rohres geführt wird, das z. B. auf jedem Zentimeter eine Öffnung zum Auskoppeln des Schalles aufweist. Eine andere Möglichkeit besteht aus einer Reihe von entlang der Laufstrecke angeordneten Leuchtmitteln, z. B. SMD-LEDs auf einer flexiblen Leiterplatte, die aufgereiht nacheinander kurz aufleuchten. Diese beiden Verfahren sind naturgemäß sehr genau durch eine definierte Signalfolge, da eine Steuerung durch einen Taktgenerator mit festem Takt erfolgt und mit jedem Startsignal 6 eine neue Initialisierung erfolgt.

Bei Empfang des Messsignales durch ein Element 2, 3, 4 stoppt dieses seinen schnellen Zähler innerhalb des Messsignalempfängers, wodurch die Laufzeit des Messsignales 7 vom Eintreffen des Startsignales 6 bis zum Eintreffen des Messsignales 7 bei dem entsprechenden Element gemessen wird und die Position über eine einfache Berechnung bis auf z. B. 10 mm genau angegeben werden kann. Die Genauigkeit hängt von der Art des Messsignales 7 und dessen Auskoppelung ab. Die Genauigkeit von 10 mm bestimmt sich z. B. aus den im Zentimeterabstand angeordneten Öffnungen auf dem den Ultraschallimpuls führenden Rohr oder aus den alle 10 mm auf einer flexiblen Leiterplatte aufgereihten SMD-LEDs.

Da üblicherweise von der Steuerung 5 nach einem Stromausfall gleich ein Startsignal 6 gesendet wird, sind die Elemente 2, 3, 4 schnell in der Lage, ihre Position zu ermitteln und der Steuerung 5 mitzuteilen. Im gezeigten Beispiel hat das erste Element 2 eine erste Position gemäß der Geschwindigkeit v₀•tₓ, das zweite Element 3 eine zweite Position entsprechend v₀•t_{y} und das dritte Element 4 eine dritte Position entsprechend v₀•t_{z}, wobei v₀ die Geschwindigkeit des Messsignales ist und tₓ die Laufzeit des Messsignales bis zu der ersten Position, t_{y} die Laufzeit des Messsignales bis zu der zweiten Position und t_{z} die Laufzeit des Messsignales bis zu der dritten Position sind.

Die Software in den Elementen 2, 3, 4 kann so gestaltet werden, dass jedes Element den genauen Abstand zum vorherigen bzw. nachfolgenden Element feststellen kann, vorzugsweise zu dem in Fahrtrichtung nächsten Element, oder den genauen Abstand zu einem Endpunkt 8 ermittelt und damit auch seinen Antrieb entsprechend steuert. Die Steuerung 5 kann jedes Element 2, 3, 4 gezielt ansprechen und dieses bis auf die Systemgenauigkeit auf eine bestimmte Position bringen.

Durch das ständige neue Aufsetzen der Positionsbestimmung durch das Startsignal 6 ist es unnötig, irgendwelche Daten zu speichern. Fehlübertragungen werden mit dem nächsten Startimpuls, d. h. Impuls des Startsignales, wieder berichtigt.

Mit diesem erfindungsgemäßen Verfahren lassen sich große Laufstrecken 1 bewältigen, mit einer hohen Signaldichte auf der Strecke auch mit hoher Genauigkeit. Durch eine ausreichend schnelle Datenübertragung zwischen der Steuerung 5 und den Elementen 2, 3, 4 lassen sich unterschiedlichste Aktionen durchführen, d. h. kundenspezifische Lösungen sind mit der entsprechenden Software jederzeit einstellbar.

### Bezugszeichenliste

- 1: Laufstrecke
- 2: erstes Element
- 3: zweites Element
- 4: drittes Element
- 5: Steuerung
- 6: Startsignal
- 7: Messsignal
- 8: Endpunkt der Laufstrecke

## Patentansprüche

1. Messsystem zur Bestimmung einer absoluten Position eines sich entlang einer Führungsschiene (1) bewegenden Elementes (2, 3, 4), das mittels eines mit hoher Geschwindigkeit versandten Startsignales (6) angesteuert wird, **gekennzeichnet durch** einen in dem Element (2, 3, 4) angeordneten Messsignalempfänger, der nach dem Empfang des Startsignales (6) eine Laufzeit (tₓ, t_{y}, t_{z}) eines bei dem Versenden des Startsignales (6) versandten Messsignales (7), das entlang der Führungsschiene (1) und langsamer als das Startsignal (6) mit konstanter bestimmter Geschwindigkeit (v₀) läuft, bis zum Eintreffen des Messsignales (7) misst.

2. Messsystem nach Anspruch 1, **dadurch gekennzeichnet, dass** das Startsignal (6) elektrisch, optisch oder per Funk versandt wird.

3. Messsystem nach Anspruch 1 oder 2, **dadurch gekennzeichnet, dass** das Messsignal (6) ein in die Führungsschiene (1) oder in ein entlang der Führungsschiene (1) verlaufendes Mittel eingekoppeltes Schallsignal ist.

4. Messsystem nach Anspruch 3, **dadurch gekennzeichnet, dass** das Schallsignal an diskreten Punkten ausgekoppelt wird.

5. Messsystem nach Anspruch 1 oder 2, **dadurch gekennzeichnet, dass** das Messsignal (6) ein zwischen diskreten Punkten der Führungsschiene (1) oder entlang der Führungsschiene (1) jeweils verzögert weiterlaufendes elektrisches Signal und/oder Lichtsignal ist.

6. Messsystem nach Anspruch 4 oder 5, **dadurch gekennzeichnet, dass** die diskreten Punkte einen Abstand gemäß der gewünschten Messgenauigkeit zueinander haben.

7. Messsystem nach einem der vorstehenden Ansprüche, **dadurch gekennzeichnet, dass** das Startsignal (6) zyklisch versandt wird und das Messsignal (7) ein entsprechend oft versandtes Pulssignal ist.

8. Messsystem nach einem der vorstehenden Ansprüche, **gekennzeichnet durch** einen Signalgeber (5), der das Messsignal (7) erzeugt und versendet.

9. Messsystem nach einem der vorstehenden Ansprüche, **dadurch gekennzeichnet, dass** das Element (2, 3, 4) seine Position anhand der gemessenen Laufzeit (tₓ, t_{y}, t_{z}) des Messsignales (7) und der konstanten bestimmten Geschwindigkeit (v₀) bestimmt, mit der das Messsignal (7) läuft.

10. Horizontalschiebewand mit mehreren sich entlang einer Führungsschiene (1) bewegenden Elementen (2, 3, 4), die mittels eines mit hoher Geschwindigkeit versandten Startsignales (6) angesteuert werden, **gekennzeichnet durch** ein Messsystem nach einem der Ansprüche 1 bis 9, wobei jedes Element (2, 3, 4) einen entsprechenden Messsignalempfänger aufweist.

11. Horizontalschiebewand nach Anspruch 10, **dadurch gekennzeichnet, dass** der Abstand eines Elementes (2, 3, 4) zu einem nächsten in Fahrtrichtung benachbarten Element (2, 3, 4) oder Endpunkt (8) des einen Elementes (2, 3, 4) ermittelt wird und der Antrieb des einen Elementes (2, 3, 4) entsprechend gesteuert wird.

12. Element für eine Horizontalschiebewand mit mehreren sich entlang einer Führungsschiene (1) bewegenden Elementen (2, 3, 4), die mittels eines mit hoher Geschwindigkeit versandten Startsignales (6) angesteuert werden, **gekennzeichnet durch** einen Messsignalempfänger eines Messsystemes nach einem der Ansprüche 1 bis 9.

13. Element nach Anspruch 12, **dadurch gekennzeichnet, dass** der Abstand des Elementes (2, 3, 4) zu einem nächsten in Fahrtrichtung benachbarten Element (2, 3, 4) oder Endpunkt (8) des Elementes (2, 3, 4) ermittelt wird und der Antrieb des Elementes (2, 3, 4) entsprechend gesteuert wird.
